Europäisches Patentamt

European Patent Office

Office européen des brevets

(19)

(11) **EP 0 823 820 B1**

(12) **EUROPEAN PATENT SPECIFICATION**

(45) Date of publication and mention
of the grant of the patent:
**22.10.2003  Bulletin 2003/43**

(51) Int Cl.⁷: **H04N 7/16**

(21) Application number: **97305874.6**

(22) Date of filing: **04.08.1997**

(54) **Charging system and method**

Abrechnungsverfahren und System

Méthode et système de débit

(84) Designated Contracting States:
**DE FR GB**

(30) Priority:  **05.08.1996  JP  20595296**

(43) Date of publication of application:
**11.02.1998  Bulletin 1998/07**

(73) Proprietor: **CANON KABUSHIKI KAISHA**
**Tokyo (JP)**

(72) Inventor: **Iwamura, Keiichi**
**Ohta-ku, Tokyo (JP)**

(74) Representative:
**Beresford, Keith Denis Lewis et al**
**BERESFORD & Co.**
**2-5 Warwick Court,**
**High Holborn**
**London WC1R 5DH (GB)**

(56) References cited:
**EP-A- 0 715 245          EP-A- 0 802 474**

• **PATENT ABSTRACTS OF JAPAN vol. 016, no.**
**264 (P-1370), 15 June 1992 & JP 04 064129 A**
**(RYOICHI MORI), 28 February 1992**

**Description**

The present invention relates to a charging system and its method and, more specifically, to a charging system and its method in a multimedia network for transmitting and providing information including, e. g., moving images, still images, voices, sounds, computer programs, data, and the like.

In recent years, improvements of optical fiber networks in trunk communication networks, spread of cable television systems, implementations of satellite communications, proliferation of local area networks, and the like have progressed rapidly. Furthermore, efforts to interconnect these communication networks are enthusiastically made. Using these communication networks, various kinds of so-called multimedia information including character data, still images, sounds, moving images, and the like are exchanged worldwide.

Under such circumstances, so-called information service industries that provide various kinds of information using such communication networks and charge for such information fees corresponding to their contents and volumes have grown. In such services, it is important to appropriately charge for the information provided. Furthermore, multimedia information as digital data is vulnerable to alteration of information such as editing, modification, and the like, and a technique that can appropriately charge for not only distribution such as dissemination and trade of information but also alteration of the provided information is required.

Also, protection of information has by no means been successful, and illicit use of video information including a program and sound is posing a problem. In order to prevent illicit use of information, a copy protection function, a method of assigning a number corresponding to a hardware number assigned to an item of hardware, e.g., a computer to software and collating two numbers upon execution of the software, and the like are available. However, the copy protection function is inconvenient upon formation of a backup copy of the software, and the method of collating the numbers is inconvenient in terms of management of numbers and sales. Hence, such methods are not practical.

In contrast to this, the concept "superdistribution" that aims at protecting the rights of software copyright holders (to be referred to as "information providers" hereinafter) has been proposed by Ryoichi Mori as per Japanese Laid-Open Patent Nos. 60-77218, 60-191322, 64-68835, 2-44447, 4-64129, and the like.

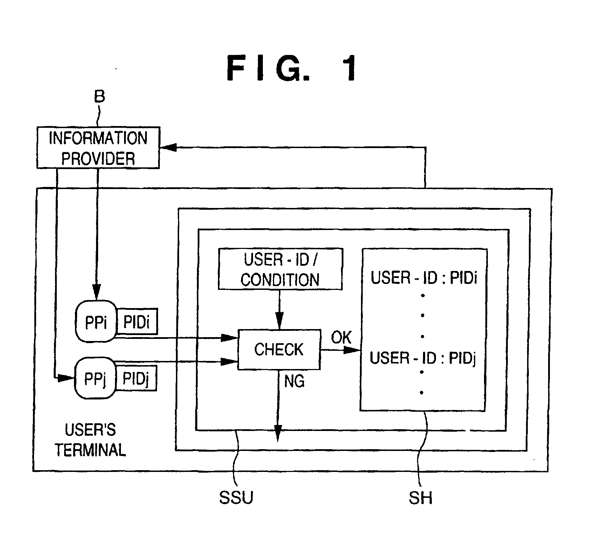

Fig. 1 is a diagram showing a prototype of "superdistribution" described in Japanese Laid-Open Patent No. 4-64129. An information provider B verifies on the basis of data PIDi (or PIDj) inherent to software and conditions in units of USER-IDs of users via CHECK if the user can use software PPi (or PPj) to be provided. If it is determined that the user can use the software, the provider B records a usage history of the software in SH. Then, the information provider B charges the user a usage fee for the software on the basis of the history. Note that a block SSU shown in Fig. 1 is a software service unit including the above-mentioned means.

However, the above-mentioned technique suffers the following problems.

(1) In "superdistribution", the information provider verifies based on data inherent to the user whether or not the user is authorized to use information. For this reason, an implementation means for "superdistribution" has at least a storage means for storing data inherent to the user. Hence, a person who wants to use information must apply for usage of information to the information provider in advance to get his or her USER-ID, and must register it as data inherent to the user. The usage application procedure and management of a large number of data (USER-IDs) inherent to users are troublesome.

(2) In order to prevent illicit use of information, or in order to recognize the use state of information to be provided by an information provider, the implementation means for "superdistribution" comprises a storage means for storing the usage history of information. The information provider charges the user a fee on the basis of this history. In "superdistribution", since information is not sold but is processed as if it were rented, the usage history is required. However, the usage history regarding information used by the user is a matter of user's privacy, and protection of the user's privacy is an important subject.

(3) "Superdistribution" is a means and system for accurately recognizing the use states of provided information, i.e., for fairly charging, but does not include neither a means nor system associated with payment of a fee. Hence, the information provider B must demand for payment of a fee and collect the fee.

(4) "Superdistribution is a system for the distribution of information literally, and does not cope with alteration of information. For this reason, the user cannot alter the provided information for his or her own purpose. Alteration of information involves by various problems such as copyrights, but a system that allows alteration of information in consideration of such problems is demanded.

An embodiment of the present information can provide a charging system and method, which allow alteration of information in consideration of various problems such as copyrights.

According to one aspect of the present invention there is provided an electronic data processor sytem as set out in claim 1.

According to a second aspect of the present invention there is provided a method of utilising an electronic data processor to process information provided by a multimedia computer network as set out in claim 13.

Embodiments of the present invention will now be described with reference to the accompanying drawings, in which:

Fig 1 is a block diagram showing a principle of a "superdistribution" system;

Fig 2 is a block diagram illustrating an electronic data processor system;

Fig 3 is a block diagram illustrating an electronic data processing system according to an embodiment of the invention;

Fig 4 is a block diagram illustrating a second embodiment of a data processing system according to the present invention;

Fig 5 is a block diagram illustrating a third embodiment of a data processing system according to the present invention;

Fig 6 is a block diagram showing the network arrangement of the third embodiment;

Fig 7 is a block diagram illustrating a fourth embodiment of a data processing system according to the present invention;

Fig 8 is a block diagram showing the network arrangement of the fourth embodiment of a data processing system according to the present invention;

Fig 9 is a block diagram illustrating a fifth embodiment of a data processing system according to the present invention;

Fig 10 is a block diagram illustrating a sixth embodiment of a data processing system according to the present invention;

Fig 11 is a block diagram showing the network arrangement of the sixth embodiment.

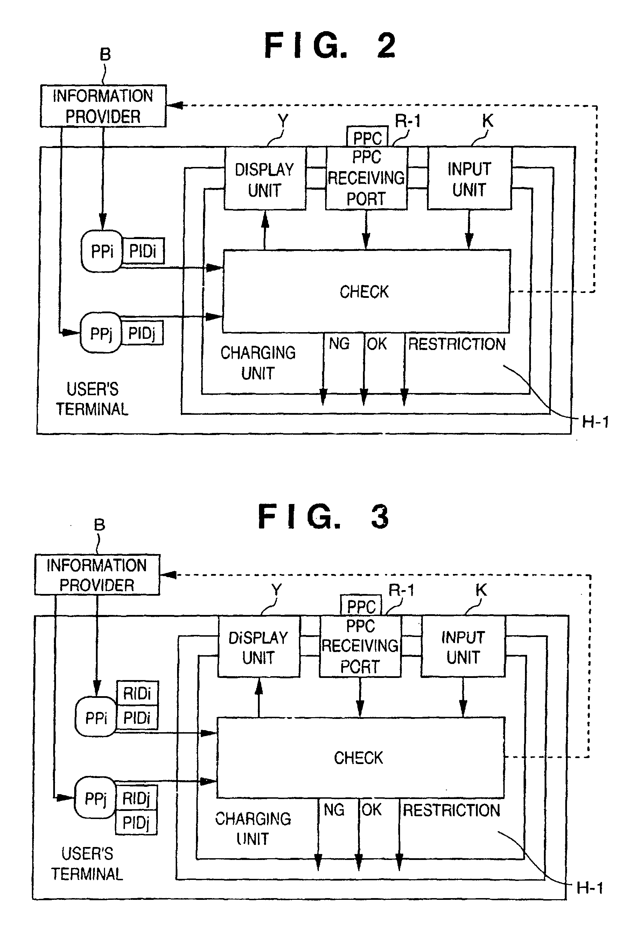

Fig 2 shows a charging system. Referring to Fig. 2, reference symbol B denotes an information provider; PPi (or PPj) information provided by the information provider B; PIDi (or PIDj), data inherent to the information PPi; PPC, money information; and CHECK, a checking unit for checking if the user is authorized to use the information to be provided.

The information PP provided by the information provider B is an original work including a literary work, music work, art work, movie work, picture work, and program work. The information provider B as a copyright holder adds, to the information PP, PID that describes license agreement and fee information associated with alteration usage such as translation, arrangement, modification, and adaptation of the information PP, usage of its secondary work, and the like.

The information provider B provides the information PP (PPi or PPj) including PID. The information PP must go via a charging unit H-1 when it is used at a user's terminal such as a personal computer or the like, and the charging unit H-1 has a receiving port R-1 of PPC as money information.

If a usage request for the information PP is generated, the usage checking unit CHECK checks based on the PID (PIDi or PIDj) and at least a portion of the PPC if the information PP can be used, and informs the user's terminal of the checking result. For example, the CHECK checks if the usage fee described in the PID falls within the PPC. If the checking result of the CHECK is OK, the user can use the information PP at his or her terminal. Information regarding the PID and PPC at that time, i.e., the usage fee of the information PP, the balance of the PPC, and the like are displayed on a display unit Y. Also, the checking result of the CHECK is displayed on the display unit Y.

As the PPC, cash, a prepaid card, and the like may be used. Also, electronic information equivalent to money stored in a storage medium (floppy disk, magnetic card, IC card, PCMCIA card, or the like), i.e., a so-called digi-cash, e-money, or the like, may be used.

More specifically whether or not the information PP can be used is checked based on the money information PPC independent from the user in place of using inherent data USER-ID in units of users. Hence, the user need not apply for USER-ID and the like, and need only have actual money or money information PPC equivalent to actual money. That is, the user pays a usage fee for only information PP he or she uses. Also, a large number of data inherent to users need not be managed, and the above-mentioned problem (1) can be solved.

Since this embodiment requires no data inherent to users, the information provider B cannot know who have used the information PP. However, the information provider B need only receive an amount equivalent to use of the information PP, and need not know information regarding the privacy of users, e.g., who uses the information PP. Hence, the above-mentioned problem (2) can be solved.

For this reason, this system has no storage unit for storing usage history indicating the correspondence between USER-ID data of users and the information used, but may have a storage unit for storing use frequency indicating how many times and which information PP was used, or a use informing unit indicating that the information PP is currently being used. In Fig. 2, a use message is sent to the information provider B via a route indicated by a dotted line.

On the other hand, when the user wants alteration usage of the information PP, he or she inserts PPC into the PPC receiving port R-1, and selects or designates information PPi of which he or she wants alteration usage using an input unit K comprising a keyboard, a pointing device, and the like. The CHECK in the charging unit H-1 checks license agreement information associated with alteration usage described in the RIDi of information PPi of which the user wants alteration usage, and if the alteration usage is permitted, the CHECK displays the license agreement terms and fee corresponding to alteration and alteration usage on the display unit Y. Of course, the display unit Y can also display the balance of the PPC.

When alteration and alteration usage are permitted in different levels, the user selects or designates his or her desired level using the input unit. If the CHECK determines that the fee corresponding to the alteration and alteration usage desired by the user falls within the balance of the PPC, it grants alteration and alteration usage, and receives a payment corresponding to the fee incurred from the PPC.

Furthermore, when the CHECK grants alteration and alteration usage, it outputs restriction information corresponding to the alteration and alteration usage described in the RID. When the alteration and alteration usage are granted, the user's terminal alters the information PP in accordance with the restriction information, and uses the altered information PP. Note that the restriction information includes information such as restrictions about copies (also including restrictions about a partial copy, the number of copies, and the like), mobility, deletion, overwriting, and substitution, the valid date, usage limitation, dissemination limitation, and the like.

For example, if the information PP is an art work that paints a human figure and its color and background can be altered but the human figure itself cannot be altered, license agreement terms to that effect are described in the RID. The CHECK outputs restriction information on the basis of these license agreement terms. That is, the restriction information at this time is used to reject a command instructing alteration of, e.g., a region corresponding to the human figure of the information PP at the user's terminal. The user's terminal write-protects, e.g., the region corresponding to the human figure of the information PP in accordance with this restriction information.

That is, according to this system, problem (4) can be solved by adding information called RID that indicates the presence of a license agreement associated with alteration usage to the information PP in addition to PID. When the user wants to alter the information PP, the CHECK determines the propriety of alteration, thus realizing a system that can cope with alteration of the information PP. Note that Fig. 2 exemplifies a case wherein the charging unit H-1 is built in the user's terminal, but may be externally connected to the user's terminal.

Fig. 3 shows an embodiment of a charging system according to the present invention.

That is, as shown in Fig. 3, PID and RID are added to information PP, so that distribution of the information PP uses information described in the PID, and alteration of the information PP uses information described in the RID, thereby realizing distribution and alteration of the information PP by a single charging system. Note that the RID may be included in the PID.

Every time the time, the prescribed use conditions, the conditions for alteration and alteration usage, and the like are changed, the CHECK performs rechecking on the basis of the conditions and fees described in the PID and RID, thus building a system that can precisely charge for stepwise usages and alterations of the information PP.

Furthermore, the RID may have portions that can be rewritten in accordance with a given priority order or the information PP may have PID corresponding to a plurality of priority orders. Note that the priority order means an author, secondary author,.... In this case, the CHECK outputs restriction information in the priority order, and can charge for the secondary work and subsequent works like in charging for the primary work.

Restriction information may often be required in correspondence with the types of user's terminals. If the CHECK can output restriction information corresponding to the user's terminal, a charging system independent from the format of the RID can be realized.

Second Embodiment

A charging system according to the second embodiment of the present invention will be described below. Note that the same reference numerals in the second embodiment denote the same parts as in the first embodiment, and a detailed description thereof will be omitted.

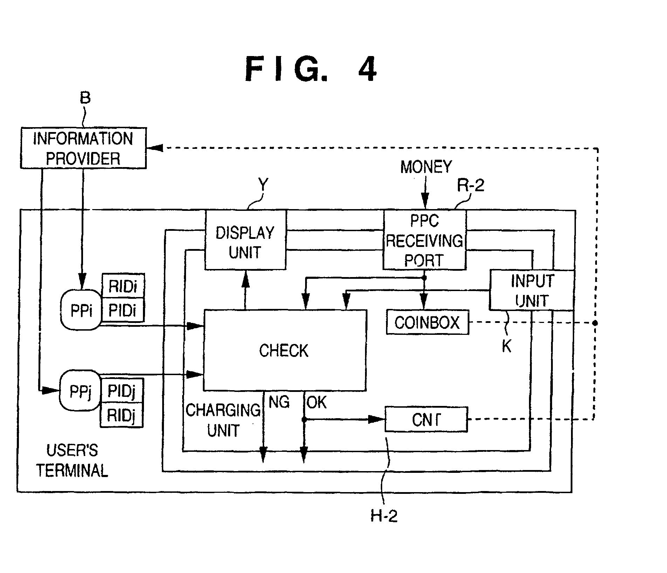

Fig. 4 shows the charging system of the second embodiment, and exemplifies a case wherein PPC corresponds to cash.

A charging unit H-2 displays a usage fee described in PID or RID of information PP on a display unit Y. The user inserts a predetermined amount of money (e.g., coins or bank notes) into a PPC receiving port R2. A CHECK grants use or alteration of the information PP when the inserted amount exceeds the fee described in the PID or RID.

When the fee is updated in accordance with the time the information is used, the charging unit H-2 displays a message indicating this on the display unit Y to urge the user to insert an additional fee. When use conditions are set using an input unit K, the charging unit H-2 displays a fee corresponding to the set conditions on the display unit Y, and urges the user to insert an equivalent amount. That is, the CHECK makes rechecking on the basis of the time, set use conditions, additionally inserted amount, and the fee described in the PID or RID.

The inserted money is stored in a unit COINBOX, and is collected by an information provider B or a clearing center that collects payments. At the time of collection, use frequency information for each information PP recorded in a unit CNT is also collected, and payments collected from the unit COINBOX are allocated to information providers B in accordance with the use frequency information. Of course, if the need for use frequency information is obviated, e.g., when the information PP to be provided is one and only, the unit CNT may be omitted.

As described above, according to the charging system using cash in this embodiment, when the information provider B or a charge distributor sets user's terminals at, e.g., telephone booths, game centers, tearooms, libraries, and the like, a charging system in which many people can use the set user's terminal using cash can be realized.

Third Embodiment

An image processing apparatus and method according to the third embodiment of the present invention will be described below. Note that the same reference numerals in the third embodiment denote the same parts as in the first embodiment, and a detailed description thereof will be omitted.

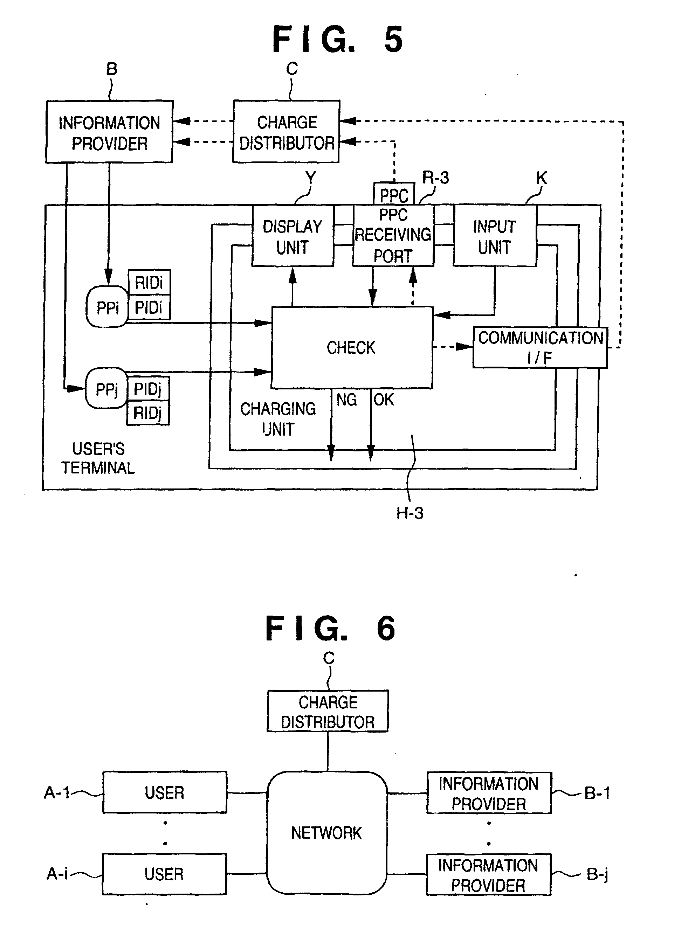

Fig. 5 shows a charging system of the third embodiment, and exemplifies a case wherein PPC corresponds to a prepaid card.

The user inserts a prepaid card into a PPC receiving port R-3. A CHECK grants use or alteration of information PP when the balance of the inserted prepaid card is larger than the fee described in PID or RID. In this case, even when the usage fee of the information PP is updated in accordance with the time the information is used, a charging unit H-3 is arranged so that the information PP can be continuously used as long as the prepaid card has a sufficient balance.

Also, when use conditions are set or changed by, e.g., an input unit K, the charging unit H-3 takes away or deducts a corresponding amount from the prepaid card. Grant/denial for use or alteration is re-examined by the CHECK on the basis of the balance of the prepaid card and the description in the PID or RID in accordance with the time or use conditions.

Note that the initial face value of the prepaid card is limited. For this reason, an additional prepaid card is preferably allowed to be inserted into the PPC receiving port, so that a plurality of prepaid cards can be successively used.

Like in telephone cards, when various kinds of retailers sell PPC prepaid cards, the prepaid cards can be easily available. In this case, the manufacturing or sales company of prepaid cards becomes a charge distributor C, and an information provider B registers himself or herself to the charge distributor C so as to receive a payment distributed in correspondence with use or alteration of information PP. Of course, the prepaid card retailers are included in the charge distributor C.

Distribution of payments corresponding to usage is implemented by a usage message with which each charging unit informs the charge distributor C of usage information via a communication interface (I/F). Note that the usage message is output only when the charging unit H-3 takes away the usage fee from the prepaid card.

The communication I/F can also be used when information PP is obtained via communications. Hence, as shown in Fig. 6, the charge distributor C, a plurality of information providers B-1 to B-j, and users A-1 to A-i are connected via a network, and the charge distributor C distributes predetermined payments to predetermined information providers B in correspondence with usage messages or alteration usage messages.

If no communication I/F is available, the kinds of prepaid cards to be used may be changed in correspondence with the information PP to be used. In this case, the CHECK checks based on the description in PID or RID of the information PP to be used and the kind of prepaid card if the use of information is granted, and grants use of the information PP if an appropriate prepaid card is inserted.

On the other hand, the charging unit H-3 may comprise a unit for recording usage records of the information PP on a prepaid card, and used prepaid cards may be recovered so as to distribute the amount in correspondence with use or alteration. In this case, in order to promote recovery of prepaid cards, for example, the card price for a new card purchased in exchange for a used card is set to be different from that of a card which is not purchased in exchange for a used card. That is, when a new card is purchased in exchange for a used card, a card price corresponding to the card face value is asked for, and when a new card is not purchased in exchange for a used card, the card price includes the price of the card itself plus its face value. Any payments corresponding to usage and alteration records that cannot be collected by this method may be distributed at the ratio of actually collected payments.

In this manner, according to the charging system using prepaid cards of this embodiment, when the information provider B distributes information over a broad range by utilizing CD-ROMs, PC communications, the Internet, and the like, and a predetermined clearing center corresponding to the charge distributor C manufactures and sells prepaid cards, a charging system in which the user purchases a prepaid card at a retailer, and can use information obtained in his or her home or other user's terminal can be realized.

Fourth Embodiment

An image processing apparatus and method according to the fourth embodiment of the present invention will be described below. Note that the same reference numerals in the fourth embodiment denote the same parts as in the first embodiment, and a detailed description thereof will be omitted.

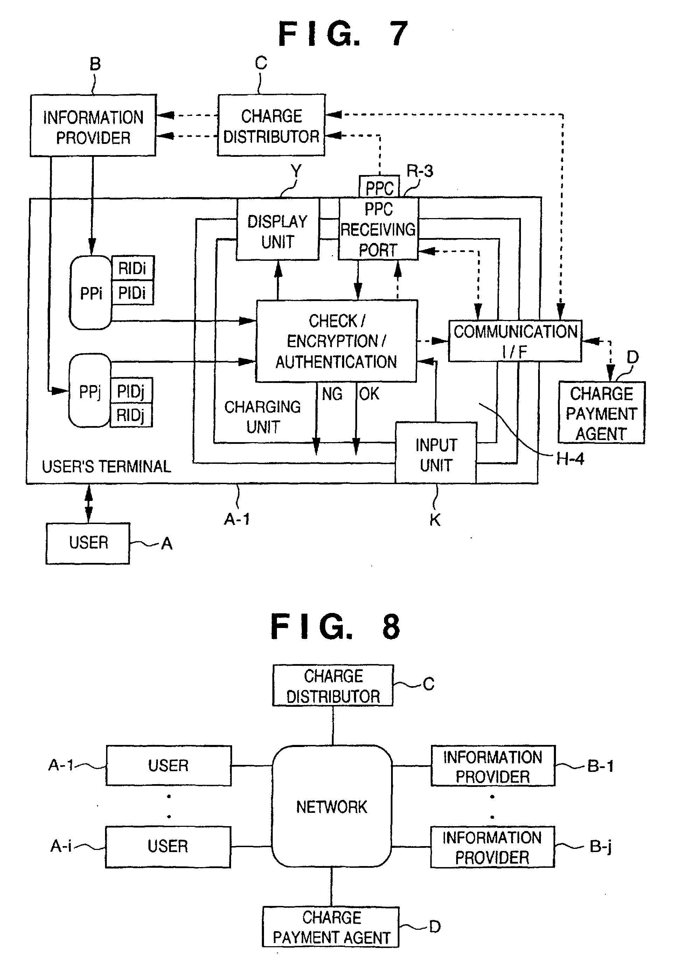

Fig. 7 shows a charging system of the fourth embodiment, which uses, as PPC, a relatively easily rewritable electrical and/or magnetic storage device, e.g., a floppy disk, an IC card, or a magnetic card. Money information recorded on such PPC includes data guaranteed by banking institutions such as banks, or specific data that can be subjected to addition processing by only a charge distributor C including retailers.

A user A of information PP inserts the PPC into a PPC receiving port R-3. A CHECK in a charging unit H-4 reads out money information from the PPC, and grants use or alteration of the information PP when the amount is larger than the usage or alteration fee described in PID or RID of the information PP, and the fee can be billed to a charge distributor C as the publisher of the PPC. Of course, the user can continuously use the information PP as long as the PPC has a sufficient amount, even when the usage fee of the information PP is charged for each unit time. When use conditions are set or changed by an input unit K, the charging unit H-4 takes away a predetermined amount from the PPC in accordance with the set or changed conditions. That is, the CHECK performs re-checking on the basis of the time, the set use conditions, the additionally inserted amount, and the fee described in PID or RID.

Since the money information at that time is electronically readable/writable information, the charging unit H-4 can exchange money information with the charge distributor C in a predetermined procedure via a communication I/F.

Unlike in the first embodiment described above, the user A of the information PP in this embodiment does not directly pay the charge distributor C. A bank or a banking institution (to be referred to as a "charge payment agent D" hereinafter) that makes a contract with the user A guarantees payment of the user A with respect to the charge distributor C. Hence, as shown in Fig. 8, the charge distributor C, the charge payment agent D, a plurality of information providers B, and users A are connected via a network.

Furthermore, the above-mentioned usage message can be sent to the charge distributor C via a communication I/F, and payments can be distributed in correspondence with usage of information PP. In this case, a payment corresponding to the usage fee can be directly sent to the charge distributor C or information provider B as e-money.

More specifically, the following communication processing can implement receipt/payment of e-money. In this case, the charging unit H-4 must have a management unit which has an encryption processor and authentication processor (to be described later), and must perfectly manage time stamps indicated by TA (to be described later). This is a measure against illicit rewriting of money information and copies of PPC in consideration of the rewritable PPC. That is, illicit use of money information such as copies is prevented by authentication of money information, and management of time stamps.

Let A, B, C, and D respectively be a user, an information provider, a charge distributor, and a charge payment agent, who respectively have, in secrecy, secret keys to which they can affix their signatures, and who know public keys that can be used to inspect each other's signatures (for example, a secret key of A will be referred to as sA hereinafter, and a public key will be referred to as pA hereinafter). A case will be examined below wherein A uses information Pi provided by B. Note that a processing result of X using a key Y is represented by $\{X\}^Y$, and the processing of the user A and management of the keys and a time stamp TA are attained by a safe-guaranteed unit in the charging unit H-4 or everybody's memories or records.

< Money Information Acquisition Processing >

(1) The user A adds his or her own registration information iA (e.g., the bank account number or credit card number) to an input request of money information for, e.g., a yen, and sends a message MA obtained by affixing a signature to that information using the secret key sA to the charge distributor C.

$$MA = \{A, \{A, iA, a, TA\}^{sA}\}$$

(2) The charge distributor C inspects the signature of the message MA using the public key pA of the user A to verify the authenticity of the received information. If the received information is authentic, the charge distributor C bills the charge payment agent D a yen using the registration information iA read out from the message MA. If the bill is accepted, the charge distributor C sends, to the user A, messages MC obtained by affixing a signature to money information using a secret key sC of the charge distributor C every basic units e (e.g., 100 yen if the information PP is in units of 100 yen). Note that the message MC is added with a time stamp TCi different from TA.

$$MC = \Sigma\{Ta, \{C, e, TCi\}^{sC}\}^{pA}$$

(3) The charging unit H-4 of a user's terminal A-1 decodes the individual messages MC using the key pA, and inspects the signature using the public key pC of the charge distributor C. When the charging unit H-4 verifies its authenticity, it records (C, e, TCi} ^sC in the PPC.

Note that TA and TCi are time stamps, and messages sent from an identical transmitter and having identical time stamps may often be illicit information. Also, TA and TCi may be serial numbers or random numbers that never or hardly match accidentally, in place of time stamps.

< Usage Information Informing Processing >

(1) When the user A wants to use information Pi, if the balance of the PPC is larger than the usage fee described in PIDi, the charging unit H-4 grants use of the information Pi.

(2) When the user A quits use of the information A, or during use, the charging unit H-4 takes away an amount corresponding to the usage fee from the balance of the PPC.

(3) At this time, the user A sends a usage message MB to the charge distributor C. Note that b represents the amount taken away from the PPC.

$$MB = \{A, B, \{B, b, TB\}^{\wedge}sA$$

(4) The charge distributor C inspects the message MB. When the distributor C verifies the authenticity of the message MB, it distributes a payment corresponding to the usage fee b (or an amount obtained by taking away some commission from the fee) as the distributed amount to the information provider B.

In the above description, the encryption system between the charge distributor C and the user A adopts public key encryption. However, if keys are shared in advance, common key encryption may be used. Also, the valid period of each message may be determined by the contents of the time stamp. In the above description, elements in each message have no order, and identifiers indicated by A, B, and the like, and time stamp are not always necessary. Furthermore, the above-mentioned money information acquisition processing and usage information informing processing sequences are merely examples, and the present invention includes any other systems that perform charging processing using electronic information as money information without using any data inherent to users.

If the user's terminal A-1 has no communication I/F, the user A must visit the office of the charge distributor C such as a retailer, and ask it to input money information to be stored in the PPC. The charging unit H-4 records usage records of information such as usage messages MB in the PPC, and when new money information is input to that PPC, the usage records are collected, so that payments can be distributed in correspondence with usages of information. Such electronic money information is specific data that can be processed by the charge distributor C alone, as described above. Hence, since the user A who has no communication I/F must actually visit the charge distributor C such as a retailer once to use the PPC, the usage records can be collected, and payments can be distributed in correspondence with usages.

As described above, according to the charging system using a floppy disk, or the like of this embodiment, the user's terminal A-1 such as a personal computer that comprises a floppy disk drive does not require any special PPC receiving port R-3. Furthermore, the need for exchange of money information via communications or prepaid card retailers can be obviated, and encryption and authentication processing are attained by software, thus building a charging system that can be easily implemented on existing networks.

Fifth Embodiment]

An image processing apparatus and method according to the fifth embodiment of the present invention will be described below. Note that the same reference numerals in the fifth embodiment denote the same parts as in the first embodiment, and a detailed description thereof will be omitted.

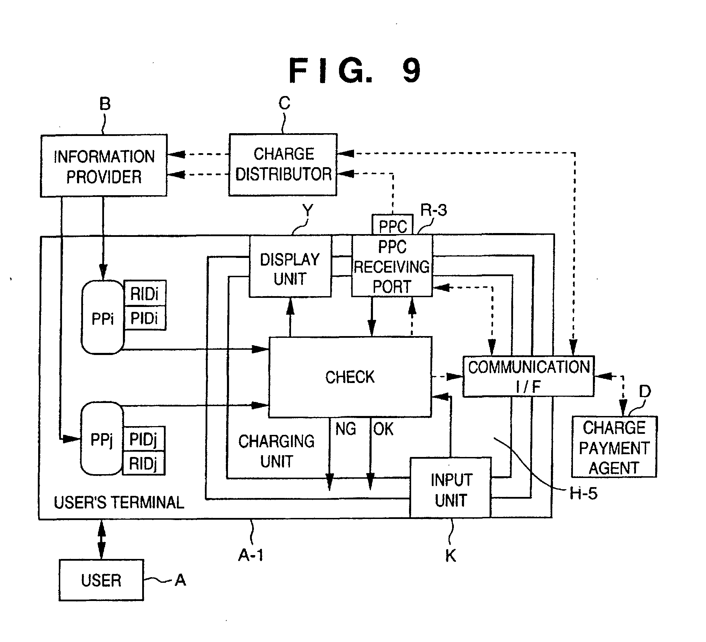

Fig. 9 shows a charging system of the fifth embodiment, which uses an electronic card such as an IC card, PCMCIA card, or the like as PPC. Money information recorded on the PPC is data guaranteed by a banking institution such as a bank, or specific data that can be subjected C to addition processing by only a charge distributor including retailers.

A user A of information PP inserts the PPC into a PPC receiving port R-3, and activates the PPC by a predetermined procedure (by, e.g., inputting an identification number). A CHECK of a charging unit H-5 reads out money information from the PPC, and grants use or alteration of the information PP when the amount indicated is larger than the usage fee described in PID or RID of the information PP and a charge distributor C as a publisher of the PPC can be billed a fee. Of course, the user can continuously use the information PP as long as the PPC has a sufficient balance, even when the usage fee of the information PP is set in a certain time unit. When use conditions are set or changed by an input unit K, the charging unit H-5 takes away a predetermined amount from the PPC in accordance with the set or changed conditions. That is, the CHECK performs re-checking on the basis of the time the information is used, the set use conditions, the additionally inserted amount, and the fee described in PID or RID.

Since the money information at that time is electronically readable/writable information, the charging unit H-5 can exchange money information with the charge distributor C in a predetermined procedure via a communication I/F.

Unlike the first embodiment described above, the user A of the information PP in this embodiment does not directly pay the charge distributor C. A bank or a banking institution (charge payment agent D) that makes a contract with the user A guarantees payment of the user A with respect to the charge distributor C. Hence, as shown in Fig. 8, the charge distributor C, the charge payment agent D, a plurality of information providers B-1 to B-i, and users A-1 to A-j are connected via a network.

Furthermore, as in the third embodiment, the above-mentioned usage message can be sent to the charge distributor C via a communication I/F, and payments can be distributed in correspondence with usage of information PP. In this case, a payment corresponding to the usage fee can be directly sent to the charge distributor C or information provider B as e-money.

More specifically, the following communication processing can implement receipt/payment of e-money. In this case, in consideration of security regarding communications and processing, an electronic card used as the PPC performs owner verification using an identification number as a security function, access control to a data memory under an access condition, and encryption and authentication by an encryption system (to be described later). At this time, a secret key used in the encryption and authentication is written in an access-controlled memory area, and only a person (card publisher, charge distributor C, or the like) who satisfies the access condition can access that area. None can change the following charging operation except for the card publisher, charge distributor C, or the like.

Let A, B, C, and D respectively be a user, an information provider, a charge distributor, and a charge payment agent. The charge distributor C shares secret keys for encrypted communications with users (for example, sA represents the secret key between A and C, and sB, between B and C). The charge distributor C holds a secret key sC for affixing a signature, and opens a corresponding inspection key (public key) pC for inspecting the signature to the public. A case will be examined below wherein the user A uses information Pi provided by the information provider B. Note that an encrypted text obtained by encrypting a plaintext X using a key Y is expressed by $\{X\}^{\wedge}Y$, and all the processing operations at the user A are performed inside the PPC having the above-mentioned security function.

< Money Information Acquisition Processing >

(1) The user A adds his or her own registration information iA (e.g., the bank account number or credit card number) corresponding to the charge payment agent D to an input request of money information for, e.g., a yen, and sends that information to the charge distributor C.

$$MA = \{A, \{A, iA, a, TA\}^{\wedge}sA\}$$

(2) The charge distributor C decrypts the encrypted portion of the message MA using the secret key sA shared with the user A, and bills the charge payment agent D a yen using the registration information iA. If the bill is accepted, the charge distributor C sends, to the user A, a message MC obtained by affixing a signature to money information using a signature key sC of the charge distributor C.

$$MC = \{TA, \{C, a, TC\}^{\wedge}sC\}^{\wedge}sA$$

(3) The user A decrypts the message MC using the signature key sA, and inspects the signature using a public key pC corresponding to the signature key sC. If the user A verifies the authenticity of the information, he or she adds money information for a yen to the PPC.

Note that TA and TCi are time stamps, and messages sent from an identical transmitter and having identical time stamps may often be illicit information. Also, TA and TCi may be serial numbers or random numbers that never or hardly match accidentally, in place of time stamps.

< Usage Information Informing Processing >

(1) When the user A wants to use information Pi, if the balance of the PPC is larger than the usage fee described in PIDi, the charging unit H-5 grants use of the information Pi.

(2) When the user A quits use of the information A, or during use, the charging unit H-4 takes away an amount corresponding to the usage fee from the balance of the PPC.

(3) At this time, the user A sends a usage message MB to the charge distributor C. Note that b represents the amount taken away from the PPC.

$$MB = \{A, \{A, B, b, TB\}^{\wedge}sA\}$$

(4) The charge distributor C inspects this message MB. If the authenticity of that information is verified, the charge distributor C distributes a payment corresponding to the usage fee b (or an amount obtained by taking away some commission from the fee) as the distributed amount to the information provider B.

When information is to be exchanged between A and B via encrypted communications, the following processing need only be inserted between the money information acquisition processing and the usage information informing processing. Note that the charge distributor C is assumed to also share a secret key with the information provider B.

< Usage Information Processing >

(1) The user A sends the following message to the charge distributor C to request it to generate a conversation key with the information provider B.

$$MA' = \{A, B, TA'\}$$

(2) The charge distributor C generates a conversation key CK and sends the following message to the user A.

$$MC' = \{\{TC', A, CK\}^{\wedge}sB, TA', B, CK\}^{\wedge}sA$$

(3) The user A decrypts the message MC' using the secret key sA, and sends $\{TC', A, CK\}^{\wedge}sB$ to the information provider B.
(4) The information provider B decrypts the received message using the signature key sB, and sends information encrypted by the conversation key CK to the user A.
(5) The user A decrypts the encrypted information using the conversation key CK.

In the above description, the encryption system between the charge distributor C and the user A adopts common key encryption, for the sake of simplicity. However, public key encryption may be used as in the above embodiment. Also, the valid period of each message may be determined by the contents of the time stamp. In the above description, elements in each message have no order, and identifiers indicated by A, B, and the like, and time stamp are not always necessary. Furthermore, the above-mentioned money information acquisition processing and usage information informing processing sequences are merely examples, and the present invention includes any other systems that perform charging processing using electronic information as money information without using any data inherent to users.

If the user's terminal A-1 has no communication I/F, the user A must visit the office of the charge distributor C such as a retailer, and ask it to input money information to be stored in the PPC. The charging unit H-5 records usage records of information such as usage messages MB in the PPC, and when new money information is input to that PPC, the usage records are collected, so that payments can be distributed in correspondence with usages of information. Such electronic money information is specific data that can be processed by the charge distributor C alone, as described above. Hence, since the user A who has no communication I/F must visit the charge distributor C such as a retailer once to use the PPC, the usage records can be collected, and payments can be distributed in correspondence with usages.

As described above, according to the charging system using the electronic card such as an IC card, PCMCIA card, or the like of this embodiment, a charging system that can assure higher security than the charging system of the fourth embodiment can be realized.

[Sixth Embodiment]

An image processing apparatus and method according to the sixth embodiment of the present invention will be described below. Note that the same reference numerals in the sixth embodiment denote the same parts as in the first embodiment, and a detailed description thereof will be omitted.

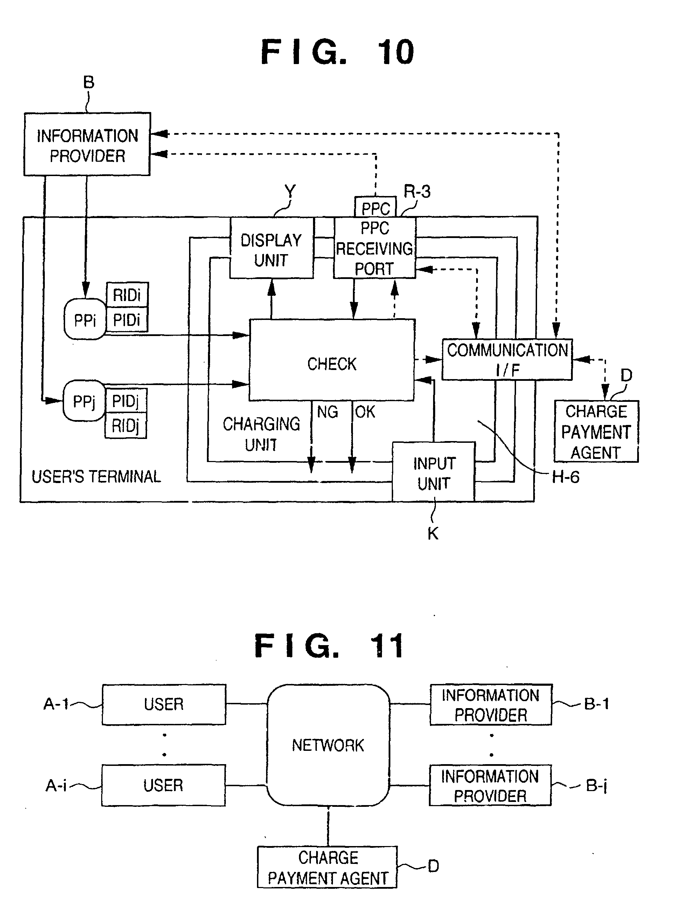

Fig. 10 shows a charging system of the sixth embodiment, which uses electronic money information as in the sixth embodiment and can obviate the need for the charge distributor C. A plurality of users A-1 to A-i, information providers B-1 to B-j, and a charge payment agent D are connected via a network, as shown in Fig. 11. Furthermore, an electronic card used as PPC can perform owner verification using an identification number as a security function, access control to a data memory under an access condition, and encryption and authentication by an encryption system (to be described later). At this time, a secret key used in the encryption and authentication is written in an access-controlled memory area. The following charging operation can only be changed by a card publisher.

Let A, B, and D respectively be a user, an information provider, and a charge payment agent, who respectively hold secret keys to which they can affix their signatures, and who know each other's public keys that can be used to inspect the signatures. For example, a secret key of A will be referred to as sA hereinafter, and a public key will be referred to as pA hereinafter. A case will be examined below wherein the user A uses information Pi provided by the information provider B. Note that a processing result of X using a key Y is represented by $\{X\}^{\wedge}Y$, and all the processing operations at the user A are performed inside the PPC having the above-mentioned security function.

< Money Information Acquisition Processing >

(1) The user A adds his or her own registration information iA (e.g., the bank account number or credit card number) to an input request of money information for, e.g., a yen, and sends that information to the charge payment agent D.

$$MA = \{A, \{A, iA, a, TA\}^{\wedge}sA\}$$

(2) The charge payment agent D inspects the signature on the message MA using the public key pA of the user A. If the registration information iA is authentic and a yen can be paid in lieu of the user A, the charge payment agent D sends back to the user A a message MD obtained by affixing a signature to money information corresponding to a yen using a secret key sD.

$$MD = (TA, \{D, a, TD\}^\wedge sD)^\wedge sA$$

(3) The user A inspects the message MD using the public key pA, and also inspects the signature using the public key pD of the charge payment agent D. If the authenticity of the information is verified, the user A adds money information for a yen to the PPC.

Note that TA and TCi are time stamps, and messages sent from an identical transmitter and having identical time stamps may often be illicit information. Also, TA and TCi may be serial numbers or random numbers that never or hardly match accidentally, in place of time stamps.

< Usage Information Informing Processing >

(1) When the user A wants to use information Pi, if the balance of the PPC is larger than the usage fee described in PIDi, a charging unit H-6 grants use of the information Pi.
(2) When the user A quits use of the information A, or during use, the charging unit H-6 takes away an amount corresponding to the usage fee from the balance of the PPC.
(3) At this time, the user A sends a usage message MB to the information provider B. Note that b represents the amount taken away from the PPC.

$$MB = \{A, B, \{B, b, TB\}^\wedge sA$$

(4) The information provider B inspects the message MB. If the authenticity of the information is verified, the information provider B presents the signature $\{B, b, TB\}^\wedge sA$ of the user A to the charge payment agent D, and receives a fee of b yen.

When information is also exchanged between the user A and the information provider B via encrypted communications, the encrypted communications may be made by directly using the public key of the communication partner. However, if the information volume is large, encrypted communications based on common key encryption may be performed as follows. In this case, the users A-1 to A-i and the information providers B-1 to B-j are assumed to share a common key encryption means. Note that the positions of A and B may be reversed in steps (1) and (2).

< Information Use Information Processing >

(1) The user A sends a message encrypted by a public key pB of a common key CK with the information provider B.

$$MA' = \{A, B, CK, TA'\}^\wedge pB$$

(2) The information provider B decrypts the received message using a secret key sB.
(3) The information provider B sends information encrypted by the common key CK to the user A.
(4) The user A decrypts the encrypted information using the common key CK.

In the above description, the encryption system of the charge payment agent D, user A, and information provider B adopts public key encryption for the sake of simplicity, but common key encryption may be used, as described above. Also, the valid period of each message may be determined by the contents of the time stamp. In the above description, elements in each message have no order, and identifiers indicated by A, B, and the like, and time stamp are not always necessary. Furthermore, the above-mentioned money information acquisition processing and usage information informing processing sequences are merely examples, and the present invention includes any other systems that perform charging processing using electronic information as money information without using any data inherent to users.

As described above, according to the charging system of this embodiment, a charging system that can obviate the need for the charge distributor C, i.e., in which the user A and the information provider B can transact directly via the charge payment agent D, can be realized. The charging system and method can be applied to e-money or digi-cash that is projected to be put into practical use in the future and process some specific data as money.

[Other Embodiments]

Note that the present invention may be applied to either a system constituted by a plurality of equipments (e.g., a host computer, an interface device, a reader, a printer, and the like), or an apparatus consisting of a single equipment (e.g., a copying machine, a facsimile apparatus, or the like).

The present invention also comprises supplying a storage medium, which records a program code of a software program that can realize the functions of the above-mentioned embodiments to the system or apparatus, and reading out and executing the program code stored in the storage medium by a computer (or a CPU or MPU) of the system or apparatus.

In this case, the program code itself read out from the storage medium realizes the functions of the above-mentioned embodiments, and the storage medium which stores the program code constitutes the present invention.

As the storage medium for supplying the program code, for example, a floppy disk, hard disk, optical disk, magneto-optical disk, CD-ROM, CD-R, magnetic tape, nonvolatile memory card, ROM, and the like may be used.

The functions of the above-mentioned embodiments may be realized not only by executing the readout program code by the computer but also by some or all of actual processing operations executed by an OS (operating system) running on the computer on the basis of an instruction of the program code.

Furthermore, the functions of the above-mentioned embodiments may be realized by some or all of actual processing operations executed by a CPU or the like arranged in a function extension board or a function extension unit, which is inserted in or connected to the computer, after the program code read out from the storage medium is written in a memory of the extension board or unit.

As described above, according to the embodiments of the present invention, a charging system and method that can solve above-mentioned problems (1) to (4) can be realized.

That is, the user can use various kinds of information as if he or she rented such information, the privacy of the user can be protected, and the information provider can receive payments corresponding to usage fees, which are distributed in correspondence with usage of information without managing usage information in units of users.

When a charge distributor including retailers, and a charge payment agent are introduced, a convenient charging system up to disbursement of payments of fees can be built.

Furthermore, a flexible charging system which can also distribute appropriate amounts to various providers associated with a network other than information providers on the basis of additional data which is not inherent to information can be built.

Also, a charging system which can cope with not only distribution of information but also alteration of information can be built.

As many apparently widely different embodiments of the present invention can be made without departing from the scope thereof, it is to be understood that the invention is not limited to the specific embodiments thereof except as defined in the appended claims.

## Claims

1. An electronic data processor system for charging for information provided by a multimedia information provider, comprising:

   electronic means for requesting multimedia information from a multimedia information provider;

   reception means for receiving requested multimedia information ($PP_{i,j}$) and additional information ($PID_{i,j}$) related to said requested multimedia information said additional information including alteration information indicative as to whether or not said requested multimedia information can be altered;

   electronic obtaining means (R-1) for obtaining payment authorisation from a medium holding money information;

   electronic checking means (CHECK) for determining based on said additional information and payment authorisation, if said multimedia information can be altered, and electronic changing means (H-1) for changing for usage and/or alteration of said multimedia information, and **characterised in that** said reception means are adapted to receive said alteration information in a format comprising a plurality of portions corresponding to respective plural copyrights associated with the requested multimedia information, the portions being in an order determined by the relative priorities of the respective copyrights.

2. A system according to claim 1, wherein when said checking means is adapted to determine that said multimedia information is permitted to be modified, and said checking means to output a license agreement term and fee information associated with alteration and alteration usage included in said alteration information.

3. A system according to claim 2, wherein said checking means is adapted to output restriction information on the basis of the license agreement term when alteration of the multimedia information has been permitted.

4. A system according to any preceding claim, wherein said alteration information includes charge information related to usage and/or alteration of the associated multimedia information, and said checking means based on the charge information and the money information is adapted to determine if the multimedia information is permitted to be used and/or modified.

5. A system according to claim 4, further comprising updating means adapted to update said charge information on the basis of the output of said checking means.

6. A system according to claim 5, wherein when an instruction has been given that the alteration of the multimedia information is permitted to be modified, said updating means is adapted to record information indicating that the multimedia information is modified in the associated charge information.

7. A system according to any preceding claim, wherein said checking means is adapted to check in order of priority to determine if the multimedia information is permitted to be used and/or modified.

8. A system according to any preceding claim, wherein said obtaining means are adapted to co-operate with the medium comprising a prepaid card.

9. A system according to claim 8, wherein said obtaining means are adapted to read money information magnetically or electronically recorded on said medium.

10. A system according to any one of the preceding claims, and adapted to output money information and/or usage information relating to requested multimedia information.

11. A system according to claim 10, wherein the system additionally comprises a charge distributor adapted to receive the output money and/or usage information and to distribute a fee corresponding to the usage information to said provider of the multimedia information.

12. A system according to any preceding claim in combination with an apparatus electronically converted therefor for receiving and charging for information, said apparatus comprising:

receiving means for receiving information and information usage restriction information comprising information on various levels of usage of the received information from an information provider;
debiting means for debiting money information from user's payment means;
user operable usage selection means for selecting level of usage of the received information;
information usage authorising means for authorising the usage of the received information if money information associated with the selected level of usage can be debited from said user's payment means,
the information and the restriction information is received by said receiving means in response to a user's request to obtain the information,
identity information of the user requesting the information remains anonymous and said debiting means performs the debit regardless of the user's identity information, and
the restriction information comprises plural portions corresponding to plural copyrights respectively and each portion is set order indicating priority of each copyright.

13. A method utilising an electronic data processor to process information provided via a multimedia computer network, comprising the steps of:

receiving the multimedia information with alteration information related to the multimedia information, the alteration information providing authorisation to modify the multimedia information;
obtaining money information from a medium that records the money information;
checking based on the alteration information and the money information, to determine if the multimedia information is permitted to be modified; and
accounting for usage and/or alteration of the multimedia information in accordance with the alteration information when the multimedia information is used and/or modified, **characterised in that**
the multimedia information and the alteration information is received in response to a user's request to obtain the information,
identity information of the user requesting the information remains anonymous and the checking means performs the checking regardless of the user's identity information, and
the alteration information comprises plural portions corresponding to plural copyrights respectively and each portion is set order indicating priority of each copyright.

14. A storage medium storing processor implementable instructions for controlling a processor to carry out the method of claim 13.

15. An electrical signal carrying processor implementable instructions for controlling a processor to carry out the method of claim 13.

**Patentansprüche**

1. Elektronisches Datenverarbeitungssystem zum Abrechnen von durch einen Multimediainformationsanbieter bereit gestellten Informationen, mit

einer elektronischen Einrichtung zur Anforderung von Multimediainformationen von einem Multimediainformationsanbieter,

einer Empfangseinrichtung zum Empfangen angeforderter Multimediainformationen ($PP_{i,j}$) und zusätzlicher Informationen ($PID_{i,j}$), die sich auf die angeforderten Multimediainformationen beziehen, wobei die zusätzlichen Informationen Änderungsinformationen enthalten, die angeben, ob die angeforderten Multimediainformationen geändert werden können oder nicht,

einer elektronischen Erlangungseinrichtung (R-1) zum Erhalten einer Zahlungsautorisierung von einem Geldinformationen tragenden Träger,

einer elektronischen Überprüfungseinrichtung (CHECK) zur Bestimmung beruhend auf den zusätzlichen Informationen und der Zahlungsautorisierung, ob die Multimediainformationen geändert werden können, und

einer elektronischen Änderungseinrichtung (H-1) zur Änderung einer Verwendung und/oder Änderung der Multimediainformationen, **dadurch gekennzeichnet dass**,

die Empfangseinrichtung zum Empfangen der Änderungsinformationen in einem Format mit einer Vielzahl von Abschnitten eingerichtet ist, die jeweils einer Vielzahl von mit den angeforderten Multimediainformationen verbundenen Urheberrechten entsprechen, wobei sich die Abschnitte in einer durch die relativen Prioritäten der jeweiligen Urheberrechte bestimmten Reihenfolge befinden.

2. System nach Anspruch 1, wobei bei der Bestimmung durch die Überprüfungseinrichtung, dass die Multimediainformationen modifiziert werden dürfen, die Überprüfungseinrichtung zur Ausgabe eines Lizenzabkommenausdrucks und von Gebühreninformationen eingerichtet ist, die mit der in den Änderungsinformationen enthaltenen Änderung und Änderungsverwendung verbunden sind.

3. System nach Anspruch 2, wobei die Überprüfungseinrichtung zur Ausgabe von Beschränkungsinformationen auf der Grundlage des Lizenzabkommenausdrucks eingerichtet ist, wenn die Änderung der Multimediainformationen erlaubt wurde.

4. System nach einem der vorhergehenden Ansprüche, wobei die Änderungsinformationen Abrechnungsinformationen hinsichtlich der Verwendung und/oder Änderung der entsprechenden Multimediainformationen enthalten, und die Überprüfungseinrichtung beruhend auf den Abrechnungsinformationen und den Geldinformationen zur Bestimmung eingerichtet ist, ob die Multimediainformationen verwendet und/oder modifiziert werden dürfen.

5. System nach Anspruch 4, ferner mit einer Aktualisierungseinrichtung zur Aktualisierung der Abrechnungsinformationen auf der Grundlage der Ausgabe der Überprüfungseinrichtung.

6. System nach Anspruch 5, wobei bei der Erteilung einer Anweisung, dass die Änderung der Multimediainformationen modifiziert werden darf, die Aktualisierungseinrichtung zur Aufzeichnung von Informationen, die angeben, dass die Multimediainformationen modifiziert sind, in den zugehörigen Abrechnungsinformationen eingerichtet ist.

7. System nach einem der vorhergehenden Ansprüche, wobei die Überprüfungseinrichtung zur Überprüfung in der Prioritätsreihenfolge zur Bestimmung eingerichtet ist, ob die Multimediainformationen verwendet und/oder modifiziert werden dürfen.

8. System nach einem der vorhergehenden Ansprüche, wobei die Erlangungseinrichtung zur Zusammenarbeit mit dem Träger eingerichtet ist, der eine Prepaid-Karte umfasst.

9. System nach Anspruch 8, wobei die Erlangungseinrichtung zum Lesen von Geldinformationen eingerichtet ist, die auf dem Träger magnetisch oder elektronisch aufgezeichnet sind.

10. System nach einem der vorhergehenden Ansprüche, das zur Ausgabe von Geldinformationen und/oder Verwendungsinformationen hinsichtlich angeforderter Multimediainformationen eingerichtet ist.

11. System nach Anspruch 10, wobei das System ferner eine Abrechnungsverteilungseinrichtung zum Empfangen der ausgegebenen Geld- und/oder Verwendungsinformationen und zur Verteilung einer Gebühr entsprechend den Verwendungsinformationen auf den Anbieter der Multimediainformationen umfasst.

12. System nach einem der vorhergehenden Ansprüche, in Kombination mit einer dafür elektronisch umgewandelten Vorrichtung zum Empfangen und Abrechnen von Informationen, wobei die Vorrichtung umfasst

eine Empfangseinrichtung zum Empfangen von Informationen und Informationsverwendungsbeschränkungsinformationen mit Informationen über verschiedene Verwendungsstufen der empfangenen Informationen von einem Informationsanbieter,

eine Belastungseinrichtung zum Belasten einer Benutzerzahlungseinrichtung mit Geldinformationen,

eine vom Benutzer bedienbare Verwendungsauswahleinrichtung zur Auswahl einer Verwendungsstufe der empfangenen Informationen,

eine Informationsverwendungsautorisierungseinrichtung zum Autorisieren der Verwendung der empfangenen Informationen, wenn die Benutzerzahlungseinrichtung mit mit der ausgewählten Verwendungsstufe verbundenen Geldinformationen belastet werden kann,

wobei die Informationen und die Beschränkungsinformationen durch die Empfangseinrichtung im Ansprechen auf eine Benutzeranforderung zum Erhalten der Informationen empfangen werden,

wobei Identitätsinformationen des die Informationen anfordernden Benutzers anonym bleiben und die Belastungseinrichtung die Belastung ungeachtet der Benutzeridentitätsinformationen durchführt, und

wobei die Beschränkungsinformationen eine Vielzahl von Abschnitten umfassen, die jeweils einer Vielzahl von Urheberrechten entsprechen, und wobei jeder Abschnitt eine Rangordnung hat, die eine Priorität jedes Urheberrechts angibt.

13. Verfahren, das eine elektronische Datenverarbeitungseinrichtung zur Verarbeitung von Informationen verwendet, die über ein Multimediacomputernetz bereitgestellt werden, mit den Schritten

Empfangen der Multimediainformationen mit Änderungsinformationen hinsichtlich der Multimediainformationen, wobei die Änderungsinformationen eine Autorisierung zum Modifizieren der Multimediainformationen bereitstellen,

Erhalten von Geldinformationen von einem Träger, der die Geldinformationen aufgezeichnet hat,

Überprüfen beruhend auf den Änderungsinformationen und den Geldinformationen zur Bestimmung, ob die Multimediainformationen modifiziert werden dürfen, und

Berücksichtigen der Verwendung und/oder Änderung der Multimediainformationen entsprechend den Änderungsinformationen, wenn die Multimediainformationen verwendet und/oder modifiziert werden, **dadurch gekennzeichnet dass**

die Multimediainformationen und die Änderungsinformationen im Ansprechen auf eine Benutzeranforderung zum Erhalten der Informationen empfangen werden,

Identitätsinformationen des die Informationen anfordernden Benutzers anonym bleiben und die Überprüfungseinrichtung die Überprüfung ungeachtet der Benutzeridentitätsinformationen durchführt, und

die Änderungsinformationen eine Vielzahl von Abschnitten umfassen, die jeweils einer Vielzahl von Urheberrechten entsprechen, wobei jeder Abschnitt eine Rangordnung hat, die die Priorität jedes Urheberrechts angibt.

14. Speicherträger, der Prozessor-implementierbare Anweisungen zur Steuerung eines Prozessors zur Ausführung des Verfahrens nach Anspruch 13 speichert.

15. Elektrisches Signal, das Prozessor-implementierbare Anweisungen zur Steuerung eines Prozessors zur Ausführung eines Verfahrens nach Anspruch 13 trägt.

**Revendications**

1. Système de processeur de données électroniques pour débiter de l'information fournie par un fournisseur d'information multimédia, comprenant :

un moyen électronique pour demander de l'information multimédia à un fournisseur d'information multimédia ;

un moyen de réception pour recevoir l'information multimédia demandée ($PP_{i,j}$) et une information additionnelle ($PID_{i,j}$) se rapportant à ladite information multimédia demandée, ladite information additionnelle comprenant une information d'altération indiquant si oui ou non ladite information multimédia demandée peut être altérée ;

un moyen d'obtention électronique (R-1) pour obtenir une autorisation de paiement à partir d'un support détenant une information monétaire ;

un moyen de vérification électronique (CHECK) pour déterminer sur la base de ladite information additionnelle et de l'autorisation de paiement, si ladite information multimédia peut être altérée, et un moyen de modification électronique (H-1) pour changer l'usage et/ou l'altération de ladite information multimédia, et

**caractérisé en ce que** ledit moyen de réception est adapté pour recevoir ladite information d'altération dans un format comprenant une pluralité de parties correspondant à différents droits (copyrights) respectifs associées à l'information multimédia demandée, les parties étant dans un ordre déterminé par les priorités relatives des droits respectifs.

2. Système selon la revendication 1, dans lequel, quand ledit moyen de vérification est configuré pour déterminer qu'il est permis de modifier ladite information multimédia, et ledit moyen de vérification pour sortir une information de termes d'agrément de licence et de redevance associée à l'altération et à l'usage de l'altération compris dans ladite information d'altération.

3. Système selon la revendication 2, dans lequel ledit moyen de vérification est configuré pour sortir une information de restriction sur la base des termes d'agrément de licence quand l'altération de l'information multimédia a été autorisée.

4. Système selon l'une quelconque des revendications précédentes, dans lequel ladite information d'altération comprend une information de débit relative à l'usage et/ou à l'altération de l'information multimédia associée, et dans lequel ledit moyen de vérification est configuré pour déterminer, sur la base de l'information de débit et de l'information monétaire, si l'information multimédia peut être utilisée et/ou modifiée.

5. Système selon la revendication 4, comprenant de plus un moyen de mise à jour configuré pour mettre à jour ladite information de débit sur la base de la sortie dudit moyen de vérification.

6. Système selon la revendication 5, dans lequel quand une instruction a été donnée que l'altération de l'information multimédia est autorisée à être modifiée, ledit moyen de mise à jour est configuré pour enregistrer l'information indiquant que l'information multimédia est modifiée, dans l'information de débit associée.

7. Système selon l'une quelconque des revendications précédentes, dans lequel ledit moyen de vérification est configuré pour vérifier, dans l'ordre de priorité, pour déterminer si l'information multimédia est autorisée à être utilisée et/ou modifiée.

8. Système selon l'une quelconque des revendications précédentes, dans lequel ledit moyen d'obtention est adapté pour coopérer avec le support comprenant une carte prépayée.

9. Système selon la revendication 8, dans lequel ledit moyen d'obtention est configuré pour lire une information monétaire magnétiquement ou électroniquement enregistrée sur ledit support.

10. Système selon l'une quelconque des revendications précédentes, et configuré pour sortir une information monétaire et/ou une information d'usage relative à l'information multimédia demandée.

11. Système selon la revendication 10, dans lequel le système comprend de plus un distributeur de débit configuré pour recevoir l'information concernant la somme et/ou l'information d'usage en sortie et pour distribuer une redevance correspondant à l'information d'usage audit fournisseur de l'information multimédia.

12. Système selon l'une quelconque des revendications précédentes en combinaison avec un dispositif électroniquement converti à cet usage pour recevoir de l'information et la débiter, ledit dispositif comprenant :

un moyen de réception pour recevoir de l'information et de l'information de restriction d'usage de l'information comprenant de l'information sur des niveaux variés d'usage de l'information reçue à partir d'un fournisseur d'information ;
un moyen de débit pour débiter une information monétaire à partir d'un moyen de paiement d'un utilisateur ;
un moyen de sélection d'usage utilisable par l'utilisateur pour choisir le niveau d'usage de l'information reçue ;
un moyen d'autorisation d'usage d'information pour autoriser l'usage de l'information reçue si l'information monétaire associée avec le niveau choisi d'usage peut être débitée sur le moyen de paiement de l'utilisateur,
l'information et l'information de restriction sont reçues par ledit moyen de réception en réponse à une demande d'un utilisateur pour obtenir l'information,
l'information d'identité de l'utilisateur demandant l'information reste anonyme et ledit moyen de débit réalise le débit indépendamment de l'information d'identité de l'utilisateur, et
l'information de restriction comprend plusieurs parties correspondant à plusieurs droits (copyrights) respectivement et chaque partie est présentée dans un ordre indiquant la priorité de chaque droit.

13. Procédé utilisant un processeur de données électroniques pour traiter une information délivrée via un réseau d'ordinateurs multimédia, comprenant les étapes suivantes :

recevoir l'information multimédia avec l'information d'altération relative à l'information multimédia, l'information d'altération fournissant une autorisation de modifier l'information multimédia ;
obtenir une information monétaire à partir d'un support qui enregistre l'information monétaire ;
vérifier sur la base de l'information d'altération et de l'information monétaire, pour déterminer si la modification de l'information multimédia est autorisée ; et
faire les comptes pour l'usage et/ou l'altération de l'information multimédia conformément à l'information d'altération quand l'information multimédia est utilisée et/ou modifiée, **caractérisé en ce que** :

l'information multimédia et l'information d'altération sont reçues en réponse à une demande d'un utilisateur pour obtenir l'information,
l'information d'identité de l'utilisateur demandant l'information reste anonyme et le moyen de vérification réalise la vérification indépendamment de l'information d'identité de l'utilisateur, et
l'information d'altération comprend plusieurs parties correspondant à plusieurs droits (copyrights) respectivement et chaque partie est placée dans un ordre indiquant la priorité de chaque droit.

14. Support de stockage stockant des instructions exécutables par un processeur pour commander un processeur pour exécuter le procédé de la revendication 13.

15. Signal électrique portant des instructions exécutables par un processeur pour commander un processeur pour exécuter le procédé de la revendication 13.

# F I G. 1

B

INFORMATION
PROVIDER

PPi | PIDi

PPj | PIDj

USER'S
TERMINAL

USER - ID /
CONDITION

CHECK → OK

NG

USER - ID : PIDi
·
·
·
USER - ID : PIDj
·
·
·

SSU

SH

# F I G. 2

# F I G. 3

# F I G. 4

**B**

INFORMATION PROVIDER

MONEY

**Y**

**R-2**

DISPLAY UNIT

PPC RECEIVING PORT

INPUT UNIT

RIDi
PIDi

PPi

COINBOX

CHECK

**K**

PPj
PIDj
RIDj

CHARGING UNIT

NG | OK

CNT

USER'S TERMINAL

**H-2**

# FIG. 5

B

C

INFORMATION PROVIDER

CHARGE DISTRIBUTOR

Y

PPC R-3

K

DISPLAY UNIT

PPC RECEIVING PORT

INPUT UNIT

RIDi
PIDi

PPi

PIDj
RIDj

PPj

CHECK

COMMUNICATION I / F

CHARGING UNIT

NG | OK

USER'S TERMINAL

H-3

# FIG. 6

C

CHARGE DISTRIBUTOR

A-1 — USER

NETWORK

INFORMATION PROVIDER — B-1

A-i — USER

INFORMATION PROVIDER — B-j

# FIG. 7

# FIG. 8

# FIG. 9

# F I G. 10

# F I G. 11